# EUROPEAN PATENT SPECIFICATION

(11) **EP 3 331 776 B1**
(45) Date of publication and mention of the grant of the patent: **24.04.2024**
(21) Application number: 16732980.4
(22) Date of filing: 14.06.2016
(51) Int. Cl.: B65D 83/38, B65D 83/62, B65D 83/42

(54) **VALVE CUPS AND CONTAINERS FOR USE IN FLUID MEDIUM DISPENSING SYSTEMS**
DICHTUNGSHALTER UND BEHÄLTER ZUR VERWENDUNG IN FLUIDMEDIUMAUSGABESYSTEMEN
COUPELLES DE VALVE ET RÉCIPIENTS À UTILISER DANS DES SYSTÈMES DE DISTRIBUTION DE MILIEU FLUIDE

(30) Priority: 04.08.2015 EP 15179625
(43) Date of publication of application: 13.06.2018
(73) Proprietor: Coster Tecnologie Speciali S.p.A., 38050 Calceranica al Lago (Trento) (IT)
(72) Inventor: GEIER, Adalberto, 38123 Villazzano (IT); TECCHIOLLI, Alfeo, 38121 Meano (IT)
(74) Representative: Meissner Bolte Partnerschaft mbB
(86) International application number: PCT/EP2016/063570
(87) International publication number: WO 2017/021038

(56) References cited:
- EP-A1- 2 287 088
- WO-A1-2009/006137
- US-A1- 2014 209 633

## Description

The invention relates to an improvement in sealing performance and attachment between a valve cup and a container for dispensing a fluid medium stored under pressure.

### Background

Systems for dispensing a fluid medium stored under pressure are generally well-known. Many systems dispense aerosols, such as deodorant or paint, generally as a fine spray. However, any fluid medium may be stored and dispensed, e.g., shampoo, etc.

Typical systems include a container, a valve, and a valve cup, wherein the valve cup supports the valve usually at a central part thereof and also closes off an opening of the container. The inner volume of the container is usually pressurised and maintained in such a state by the valve and the seals between the valve cup and valve, and valve cup and container opening. When the valve is actuated, the pressure difference between the inner volume of the container and the outside environment causes the fluid medium to be expelled from the container. Some systems employ a two-stage container having an inner and outer container, one of which contains the propellant gas, whereas others may employ a single container with the fluid medium also acting as the propellant.

Traditionally, the containers are made from a metal, usually aluminium. Recently, there has been an increasing trend to use plastics, namely polyethylene terephthalate (PET), as the containers for these dispensing systems for various advantages such as cost and ease of manufacturing, among others. The systems should be stable and be able to withstand the internal pressures of the container while also providing an adequate seal.

Conventional systems employing PET containers also typically use a metal, e.g., aluminium, for the valve cups which ensures a suitable sealing engagement between the valve cup and valve. The valve cup may be clinched to a lip of the opening of the container. While the attachment between the valve cup and container is often sufficient at most normal operating temperatures, higher temperatures can cause the PET container to deform to a large degree such that the connection between the aluminium valve cup and container opening is no longer fluid tight. This is highly disadvantageous as the propellant gas and/or the fluid medium can escape from the container.

DE 37 37 265 A1 proposes a solution to this problem by additionally forming the valve cup from a plastic, such as PET. In this case, the valve cup can be welded, e.g., friction welded, to the container because the valve cup and container are made of the same or similar materials. At high temperatures, the weld is sufficient to maintain the seal between the valve cup and the container.

US2014/209633 is disclosed an aerosol dispenser wherein an outer container has an opening for optionally receiving a valve cup, a neck depending from a top opening, a shoulder subjacent thereto and a body below the shoulder. The lower portion of the neck and optionally the shoulder are thermally crystallized. In some embodiments the outer container may comprise a plastic pressurizeable container that is polymeric and substantially or entirely comprise PET and/or PEN. The valve cup may also be formed of semi-crystalline material. Thus, the entire aerosol dispenser or, specific components thereof, may be free of metal.

European safety requirements specify that aerosol systems should not be exposed to temperatures above 50°C. However, in practice, such dispensing systems may be subject to much higher temperatures. In the case of DE 37 37 265 A1, the disclosed device does not provide sufficient sealing performance at temperatures exceeding 50°C because the plastic valve cup may also deform at these temperatures to the extent that the seal between the valve cup and valve is lost.

A dispensing system exhibiting sufficient sealing performance at temperatures greater than 50°C is therefore required. Herein, temperatures greater than 50°C should be understood as reasonable temperatures that the dispensing system might be exposed to, e.g., up to 100°C.

### Summary

The problem is solved by a valve cup for use with a container for dispensing a fluid medium stored under pressure, the valve cup adapted to support a valve and to seal an opening of the container, wherein:
- the valve cup is formed from a first plastic material that is a semi-crystalline polyester,
- the valve cup comprises a central opening that is adapted to receive and support the valve; and
- characterised in that
- the valve cup comprises one or more enforcing members radially protruding from the central opening, the one or more enforcing members integrally formed with the valve cup and adapted to increase the rigidity of the valve cup.

A valve cup is a component that supports a valve and is placed so as to cover the opening of a container suitable for containing a fluid medium to be dispensed. Semi-crystalline polyesters have a greater degree of crystallinity compared to more amorphous polyesters. As a result, semi-crystalline polyesters typically do not deform when exposed to temperatures greater than 50°C, at least as compared with amorphous polyesters. In this way, structural rigidity of the valve cup can be improved at higher temperatures meaning that the seal between the valve held by the valve cup and the valve cup is maintained.

A further embodiment provides the valve cup above, wherein the first plastic material has a degree of crystallinity greater than 35%, preferably greater than 38%, when measured using differential scanning calorimetry.

The degree of crystallinity is one property that provides the plastic material with its rigidity at higher temperatures. Typically, plastics may have some percentage of amorphous regions and some percentage of crystallised regions. When exposed to high temperatures, the amorphous regions undergo a transition from a hard and brittle state to a more rubbery and soft state. Thus, it can be considered that the amorphous regions lead to deformation of the plastic at greater temperatures. Providing a material with a higher degree of crystallinity may reduce the degree of deformation of the plastic material at higher temperatures.

As a further note, the degree of crystallinity is generally measured with respect to a certain method - here it is given as differential scanning calorimetry (DSC). Generally, various methods may give slightly different results because the degree of crystallinity is essentially an average value. When using other methods, an appropriate scaling should be taken into consideration with respect to the value obtained by DSC.

Another embodiment provides any of the valve cups above, wherein the first plastic material is selected from the group consisting of: crystallised PET, PBT, PEN, PEN/PET copolymers, or a blend of any of the foregoing.

Crystallised PET (CPET), PBT, PEN, and PEN/PET copolymers are or can be semi-crystalline polyesters. These materials are particularly advantageous for their other properties in packaging and not just the rigidity at elevated temperatures. However, any polyester that can be semi-crystalline and does not deform to a suitable degree at large temperatures may also be used as the semi-crystalline material. Moreover, any blend of CPET, PBT, PEN, and PEN/PET may be used as the first plastic material. In a preferred embodiment, PBT is used as the first plastic material.

The enforcing members may be provided on a surface of the valve cup and extend in a radial direction from a location where the valve is supported. The enforcing members may be made of the same material as the valve cup or a different material. The enforcing members are adapted to may increase the rigidity of the valve cup in a mechanical sense by directing or channelling any deformation. According to the invention, the enforcing members are integrally formed with the valve cup.

A further embodiment comprises any of the above valve cups, wherein the valve cup further comprises an inverted U-shaped receiving portion configured to receive a lip portion of the container.

The inverted U-shaped receiving portion can be provided on an outer surface or diameter of the valve cup and is preferably shaped and sized to receive a lip portion of the container. In this manner, the valve cup can be reliably positioned with respect to the container and can be suitably attached via, for example, welding.

Yet another embodiment provides any of the valve cups above, in particular directly above, wherein the inverted U-shaped receiving portion comprises at least one protrusion on a surface facing the container when receiving the lip portion, the protrusion adapted to frictionally engage the lip portion.

The inverted U-shaped receiving portion may be provided with at least one protrusion to aid in fixing, at least temporarily, the valve cup to the container to thereby facilitate the welding without concern of the valve cup being displaced.

The problem is also solved by a fluid medium dispensing system comprising:
- a container for storing a fluid medium under pressure, the container comprising an opening;
- a valve; and
- any of the valve cups above further adapted to support the valve and seal the opening of the container, wherein
- the container is formed from a second plastic material, and
- the first plastic material is weldable to the second plastic material.

Reliable sealing may be achieved not only by providing a rigid valve cup in order to maintain the seal between the valve cup and the valve, but also by ensuring that the container is suitably sealed to the valve cup. Plastic containers may be advantageous for various reasons compared to metal containers, e.g., because of cost or ease of manufacturing. However, some plastic containers may be prone to deformation at higher temperatures, e.g., conventional PET used for bottles. A plastic valve cup permits welding to the plastic container. Therefore, even if the container deforms, the container is fixed to the valve cup in such a way that the seal therebetween is not broken. In other words, the seal between the valve cup and container is maintained. Hence, a rigid plastic valve cup provides the ability to make use of the advantages of plastic containers, while maintaining the seal between the valve and valve cup.

In one embodiment of the system above, the second plastic material is a polyester, preferably PET.

Polyesters, and in particular PET, have many advantageous qualities in packaging applications. They can be easy to manipulate and thus forming valve cups and containers may be relatively easier and quicker. In some cases, the polyesters may also be relatively cheap. Some polyesters can also be recycled thus reducing the overall overhead cost. Finally, some polyesters can also be sterilised which is particularly advantageous for medical applications.

A further embodiment provides any of the systems above, wherein the valve cup is weldable to the container by one of: friction welding, ultrasonic welding, and laser welding.

When using plastics and pressurised containers, it is advantageous to employ any of the welding methods above. Preferably, the welding used in the system above provides a chemical bond between the valve cup and container that can withstand the forces that may be experienced due to deformation of the container at higher temperatures.

A further embodiment provides any of the systems above, wherein the valve cup is welded to container, thereby providing a seal between the valve cup and the opening of the container.

In some cases, the valve cup and container may be provided separately to enable undercup gassing when pressurising the inner volume of the container.

The problem is also solved by a container for dispensing a fluid medium stored under pressure and comprising an opening, the container for use with a valve cup supporting a valve sealing the opening of the container, wherein
- at least a part of the container adjacent the opening is formed from a plastic material that is a semi-crystalline polyester.

In an alternative to the embodiments above, at least a part of the container may be formed from the semi-crystalline materials. Preferably, this part is adjacent or in contact with the opening of the container. In this way, when the container experiences elevated temperatures, the part adjacent or in contact with the opening does not deform. In other words, at elevated temperatures, the opening maintains its shape. In this way, any seal with the valve cup can be maintained.

A further embodiment provides the container above, wherein the first plastic material has a degree of crystallinity greater than 35%, preferably greater than 38%, when measured using differential scanning calorimetry.

Another embodiment provides any of the containers above, wherein the first plastic material is selected from the group consisting of: crystallised PET, PBT, PEN, PEN/PET copolymers, or a blend of any of the foregoing. In a preferred embodiment, PBT is used as the first plastic material.

In yet another embodiment, any of the containers above further comprise a neck, the neck connecting the opening to a main body of the container, and wherein the entire neck of the container is formed of the first plastic material.

Forming the entire neck of the container from the semi-crystalline material may be advantageous in terms of rigidity and also in reducing strain and stress forces between the parts of the container formed from the semi-crystalline material and other material(s).

A further embodiment provides any of the containers above, wherein the entire container is formed of the first plastic material. This may be advantageous as very few or no stress or strain forces may be experienced within the body of the container, thus making the container more stable particularly under pressure and at higher temperatures.

In another embodiment, any of the containers above may having a lip portion, wherein the opening of the container comprises the lip portion, the lip portion adapted to engage with an inverted U-shaped receiving portion of the valve cup.

WO2009/006137 discloses an aerosol canister for a pharmaceutical product such as an inhaler wherein the canister is preferably a metal can that has a polymeric film applied around its outside surface. The polymeric film forms a seal with a ferrule comprising a valve body. The ferrule is crimped to the valve body.

In embodiments of the present invention, the valve cup may be provided with a polyester lining at at least a part of the valve cup adapted to contact the container.

In an alternative valve cup, the valve cup may be formed of two materials; a metal or rigid material body, and a polyester lining. The metal or rigid material may be formed from any suitable material that does not deform or warp at temperatures greater than 50°C. That is, the rigidity of the valve cup is provided by the metal or rigid material, which thereby ensures that the valve is reliably held and sealed by the valve cup.

The valve cup also comprises a polyester lining covering at least a part of the metal or rigid material valve cup. Preferably, this part faces the container when the valve cup is fixed to the container. In this way, the valve cup may be welded to a plastic container, thus enabling a seal between the valve cup and the container.

In another embodiment of the valve cup above, the valve cup is formed from aluminium and the polyester lining is formed from PET.

In another embodiment of any of the valve cups above, the polyester lining is coated or held by the valve cup and may be fixed by adhesive to the valve cup. The polyester lining may be coated directly onto a surface of the valve cup, thus providing a chemical bond between the metal or rigid material and the polyester lining. This may be advantageous should the polyester lining experience distortion when heated. Alternatively, the polyester lining may be held by a specific configuration of the valve cup, e.g., the valve cup may be shaped so as to be able to crimp or clinch the polyester lining. This provides a mechanical configuration, which may be advantageous when coating is not possible because of the materials chosen, or when the chemical bonds do not sufficiently withstand deformation of the polyester lining.

In another embodiment of any of the valve cups above, the polyester lining is provided on an underside of the valve cup.

The problem is also solved by a fluid medium dispensing system comprising:
- a container for storing a fluid medium under pressure, the container comprising an opening;
- a valve; and
- any of the valve cups above and adapted to support the valve and seal the opening of the container, wherein
- the container is formed from a second plastic material, and
- the polyester lining is weldable to the second plastic material.

As discussed above, reliable sealing may be achieved not only by providing a rigid valve cup in order to maintain the seal between the valve cup and the valve, but also by ensuring that the container is suitably sealed to the valve cup. Plastic containers may be advantageous for various reasons compared to metal containers, e.g., because of cost or ease of manufacturing. However, plastic containers may be prone to deformation at higher temperatures, e.g., conventional PET used for bottles. A valve cup comprising a held or coated polyester lining permits plastic welding to the plastic container. Therefore, even if the container deforms, the container is fixed to the valve cup in such a way that the seal therebetween is not broken. In other words, the seal between the valve cup and container is maintained. Hence, a rigid valve cup comprising a polyester lining provides the ability to make use of the advantages of plastic containers, while maintaining the seal between the valve and valve cup.

In a further embodiment of the system above, the second plastic material is a polyester, preferably PET.

In a further embodiment of the systems above, the valve cup is weldable to the container by one of: friction welding, ultrasonic welding, and laser welding.

In another embodiment of any of the systems above, the valve cup is welded to container, thereby providing a seal between the valve cup and the opening of the container.

### Brief Description of the Drawings

- Fig. 1: shows an assembled dispensing system in accordance with a first embodiment of the invention;
- Fig. 2a: shows a cross-section of the valve cup of Fig. 1;
- Fig. 2b: shows a top-down view of valve cup in Fig. 2a;
- Fig. 3: shows an exploded view of the valve cup and container of Fig. 1;
- Fig. 4: shows a valve cup in accordance with a third embodiment of the present invention; and
- Fig. 5: shows an exemplary method for assembling a dispensing system.

### Detailed Description

### First Embodiment

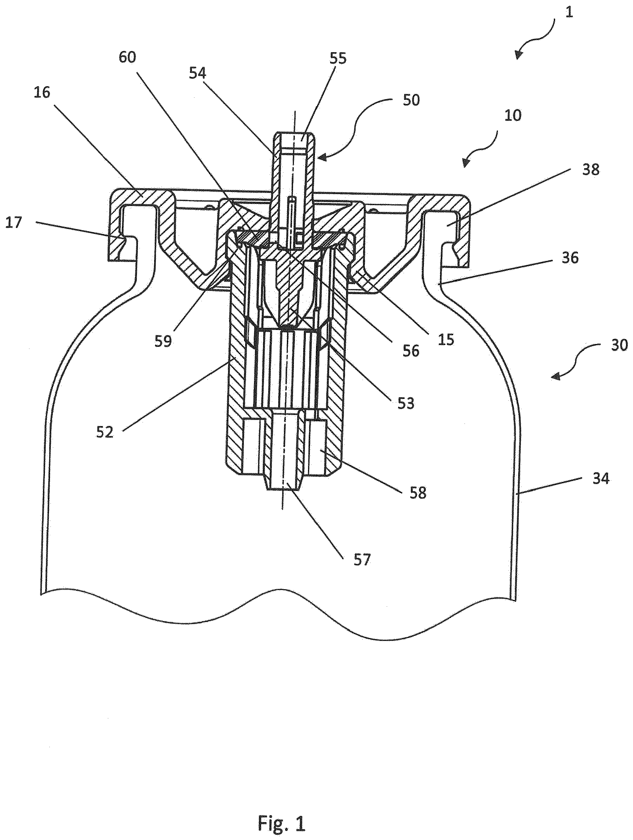

Fig. 1 shows a dispensing system 1 in accordance with the principles of the present invention. The dispensing system 1 includes a valve cup 10 according to a first embodiment of the invention, a container 30, and a valve 50. Typically, the inner region of the container 30 is pressurised to a pressure greater than atmospheric pressure. When a fluid medium is stored within the container, this pressure may be 7 bar, although the pressure is not limited to this and may take any desired value limited only by regional or governmental restrictions. The valve 50 is generally held in a fixed position by the valve cup 10 such that, when a force is applied to the valve 50 from a user, the valve 50 can be actuated to an open position. In this position, the pressure difference causes the fluid medium to be distributed from the container 30 via the valve 50.

The valve 50 is shown in detail in Fig. 1, but it should be appreciated that any suitable known valve can be substituted for valve 50. In Fig. 1, the valve 50 may include a main body 52 which is preferably cylindrical and includes a hollow inner portion. A plunger 53 may also be provided and communicates with the hollow inner portion of the main body 52. In some embodiments, the plunger 53 may be disposed totally within the main body 52, but preferably has a dispensing tip 54 protruding away from the main body 52.

The dispensing tip 54 may have any cross-sectional shape but is preferably cylindrical. The dispensing tip 54 may also include an upper channel 55 that defines a hollow inner portion of the dispensing tip 54. A through hole 56 may be provided at a lower portion of the dispensing tip 54. In Fig. 1, the through hole 56 extends perpendicularly to the axis of the upper channel 55, but the through hole 56 is not limited to this configuration. The main body 52 of the valve 50 may also include a lower channel 57 that extends from a lower part of the main body 52. In one configuration, as seen in Fig. 1, the upper and lower channels 55, 57, and the plunger 53 and main body 52 share the same common central axis.

The plunger 53 may be provided so as to slide in the direction of the common central axis. The plunger 53 may be biased to a closed position by a spring (not shown) disposed in the hollow portion of the main body 52 and communicating with receiving parts, such as perpendicular flanges, of the plunger 53. Fig. 1 shows a possible closed position whereby the lower channel 57 is prevented from fluidly communicating with the upper channel 55 and through hole 56 by a seal member 60, described in more detail below. To actuate the valve 50, a user may apply a downward force in the axial direction of the main body 52, thereby causing the plunger 53 to traverse downwards (with respect to Fig. 1) such that the through hole 56 communicates with the hollow part of the main body 52. In this way, the upper and lower channels 55, 57 may be in fluid communication in this open position. Based on the pressure difference, the fluid medium can be evacuated from the container 30 through the lower channel 57, the hollow portion of the main body 52, the through hole 56, and finally the upper channel 55. A cap or other directional device may be provided to communicate with the dispensing tip 54 to direct the flow of the fluid medium when exiting the upper channel 55 as is known in the art.

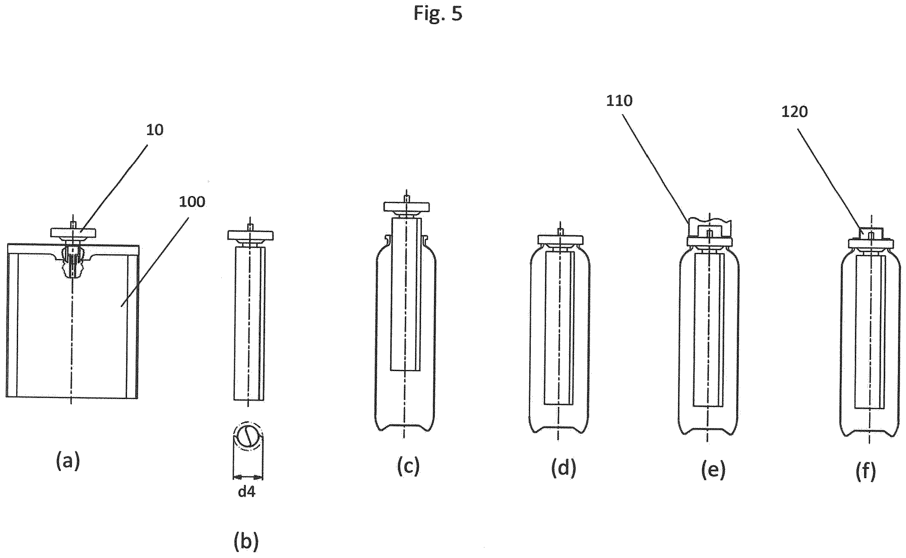

Optionally, a bag 100 (see Fig. 5) may be attached to the valve 50. The valve 50 may have recesses 58 or any other means to allow for attachment of the bag 100 to the valve 50. Preferably, the bag 100 has an opening that fits around the lower channel 57 of the valve 50. In this way, the inner volume of the bag 100 may be in fluid communication with the lower channel 57 and hence also the upper channel 55 when the valve 50 is actuated. In this optional configuration, the fluid medium may be housed in the bag 100 and the inner volume of the container 30 between the walls of the container 30 and the bag 100 may be pressurised with propellant gas. In the alternative, the fluid medium may also act as the propellant gas in the absence of the bag 100.

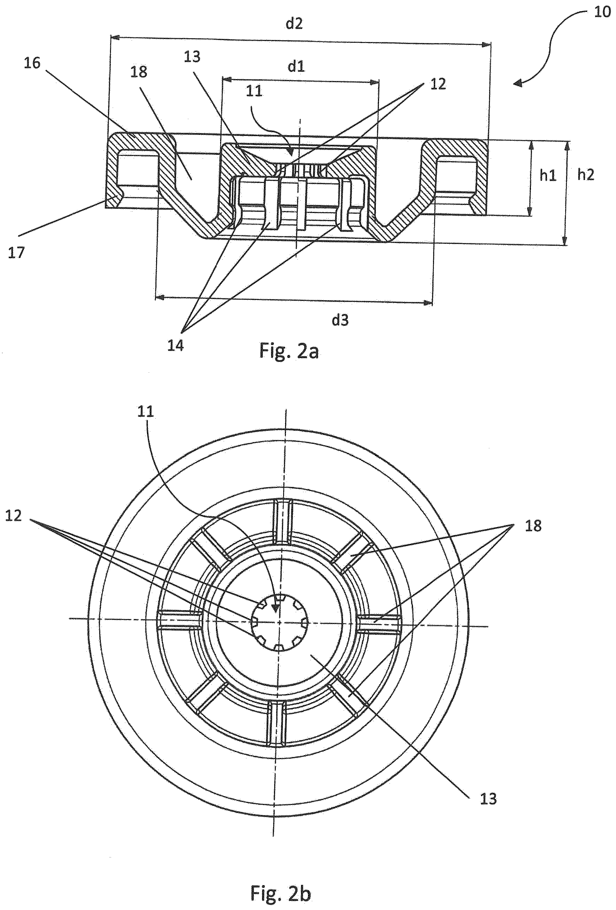

The valve 50 is supported by the valve cup 10. In the example of Fig. 1, the valve 50 is centrally mounted in the valve cup 10; that is, the valve cup 10 and valve 50 share the same central axis. The valve cup 10 may have a central opening 11 for such a purpose, as seen in Fig. 2a. However, it should be appreciated that any mounting configuration of the valve 50 can be employed.

Figs. 2a and 2b further highlight the exemplary mounting configuration for mounting the valve 50 to the valve cup 10. The central opening 11 may be defined by an inclined portion 13 of the valve cup 10. The inclined portion 13 may define an outer diameter d1 at its thickest point and slope towards the central opening 11, the central opening 11 having a diameter smaller than d1. The diameter d1 is preferably larger that the diameter of the main body 52 of the valve 50. In one example configuration, the diameter d1 may be 14 mm, but the diameter d1 is not limited to this value. It should also be appreciated that the inclined portions 13 do not have to be inclined, but should at least project towards the central opening 11. The inclined portion 13 may also have a number of first inner projections 12 disposed at the sides facing central opening 11. While Fig. 2b shows eight first inner projections 12, the present invention is not limited to this number. These first inner projections 12 may communicate with the outer diameter of the dispensing tip 54 of the valve 50 in order to firmly support the dispensing tip 54 as seen in Fig. 1.

The valve main body 52 may be supported by second inner projections 14 that, in Fig. 2a, are disposed below the inclined portions 13. In this way, the valve 50 may be threaded through the valve cup 10 from a lower side thereof (i.e., starting from the direction where the container 30 is positioned in Fig. 1) until the top of the main body 52 abuts either the lower side of the inclined portions 13 or the seal member 60 positioned at the lower side of the inclined portions 13. Projections on the top of the main body 52 as seen in Fig. 1 may also be provided so as to accommodate the seal member 60. A groove 59 in the top part of the valve main body 52 may also be provided to aid in aligning the seal member 60, allowing the seal member 60 to flex, and/or equalising the pressure.

The seal member 60 is preferably sized so as to surround the outer diameter of the dispensing tip 54 and cover the through hole 56 in the closed position, as seen in Fig. 1. When the plunger 53 is pressed downwards by the user, the seal member 60 may be permitted to flex by virtue of the groove 59, although this is not essential.

When assembling the valve 50 and valve cup 10, the seal member 60 may be inserted into the lower region of the valve cup 10 defined by the second inner projections 14, or the seal member 60 may be positioned on top of the valve main body 52. In any case, when the valve 50 is threaded into the valve cup 10 such that the dispensing tip 54 passes through the central opening 11, the second inner projections 14 may hold the valve main body 52 in place. In some embodiments, the second inner projections 14 may include raised portions 15 that snap fit into corresponding receiving portions provided in the valve main body 52. Fig. 1 exemplifies this configuration in more detail. This configuration enables the valve 50 to be rigidly held and sealed by the valve cup 10.

The structure of the valve cup 10 is not particularly limited. Figs. 1, 2a, and 2b show one exemplary configuration, although the specific construction is not limited to that shown. The valve cup 10 may include inverted U-shaped receiving portions 16 that are adapted to receive a lip portion 38 of the container 30. The outer side of the inverted U-shaped receiving portions 16 may define the outer dimension or diameter d2 of the valve cup 10. Preferably, the diameter d2 is greater than outer diameter of an opening 32 of the container 30. In one example configuration, the diameter d2 may be 34.1 mm, but the diameter d2 is not limited to this value.

The inverted U-shaped receiving portions 16 may define a space wherein the inner surfaces of the inverted U-shaped receiving portions 16 may contact the lip portion 38 of the container 30 when the valve cup 10 is attached to the container 30. The innermost surface of the inner surfaces may define a diameter d3 of the valve cup 10 which may be equal to or less than the inner diameter of the opening 32. In one example configuration, the diameter d3 may be 24.8 mm, but the diameter d3 is not limited to this value. In some configurations, the outermost surface of the inner surfaces may be provided with a projection 17 extending towards the innermost surface. As seen in Fig. 1, the projection 17 may mate with a lower part of the lip portion 38. Preferably, the projection 17 facilitates a snap-fit engagement of the valve cup 10 with the container 30 which may improve the ease of the welding process between the valve cup 10 and container 30 by ensuring correct alignment.

The inverted U-shaped receiving portions 16 may have a height h1 than is greater than the height of the lip portion 38 such that the lip portion 38 is completely contained within the inverted U-shaped receiving portions 16. This configuration is seen in Fig. 1. In one example configuration, the height h1 may be 6.7 mm, but the height h1 is not limited to this value. The valve cup 10 may also have a section that connects the outer part of the inclined portions 13 to the inner part of the inverted U-shaped receiving portions 16. This section may define a second height h2 than is greater than the height h1 such that the section is positioned below the lip portion 38. In one example configuration, the height h2 may be 9.25 mm, but the height h2 is not limited to this value.

The section is also provided with a number of enforcing members or portions 18 that extend from the inverted U-shaped receiving portions 16 to the outer side of the inverted portions 13. This may aid in increasing the structural rigidity of the valve cup 10 while also reducing production costs and material consumption. Fig. 2b shows eight enforcing portions 18 but the number is not limited to this and more or less enforcing portions 18 can be used depending on the desired structural requirements. The enforcing portions 18 can be made of the same material as the valve cup 10 or a different material. The enforcing portions 18 may be integrally formed with the valve cup 10 or formed as separate components.

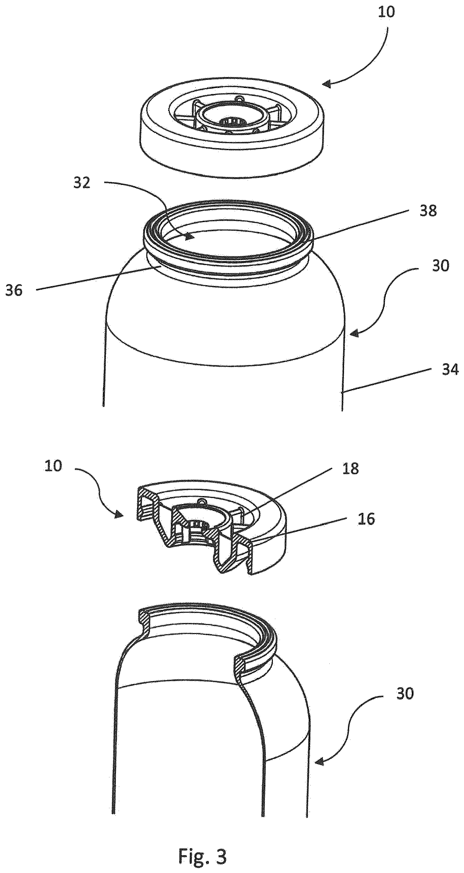

As mentioned above, the valve cup 10 is configured to be attached to the container 30. In Fig. 3, the container 30 comprises an opening 32 that is circular; however, any shaped opening 32 may be used. The container 30 may comprise a main body 34 that is connected to the opening 32. In some preferred configurations, the container 30 may include a neck portion 36 which connects the opening 32 to the main body 34. The lip portion 38 may be provided as part of the neck portion 36 or as a separate component. The general dimensions of the container 30 are not limited in any particular manner, aside from the relationships with respect to the dimensions of the valve cup 10 as mentioned above.

In accordance with the first embodiment of the present invention, the valve cup 10 is formed from a plastic material that is a semi-crystalline polyester. In this manner, the structural rigidity of the valve cup 10 can be ensured beyond the recommended 50°C owing to the higher degree of crystallinity. In some cases, the degree of crystallinity may be greater than 35%, and preferably greater than 38% when measured using differential scanning calorimetry (DSC). DSC is a wellestablished method for measuring thermal properties of materials and is not explained further herein.

One material that can be used for the valve cup 10 of the present invention is crystallised PET (CPET). PET can either be amorphous or semi-crystalline, depending on how it is processed. Typically, PET can be injection moulded using a suitable mould (e.g., a valve cup). When a standard cycle time is used, the resulting PET product is completely amorphous. A semi-crystalline plastic is one that displays crystalline structures but also amorphous regions. When heated, the amorphous regions can transition from a hard and brittle state to a rubbery, soft, and elastic state; the temperature at which this occurs is known as the glass transition temperature. In a semi-crystalline plastic, the rigidity of the plastic is proportional to the degree of crystallinity, which essentially defines the percentage of the plastic that exhibits crystalline structures. Because the crystalline structures do not undergo the transition from hard to rubbery states, the crystalline structures keep their shape and thus can maintain the rigidity of the semi-crystalline plastic even when the amorphous regions do make the transition at the glass transition temperature.

The approximate degree of crystallinity of PET ranges from 30% to 40%, although other percentages may be possible. CPET may be formed by heating virgin PET and allowing the heated PET to cool slowly, more slowly than prescribed by a standard cycle used in injection moulding, thus forming crystalline structures. Thus, CPET has a high degree of crystallinity. In contrast, amorphous PET (APET) is cooled much more quickly preventing the crystalline structures from forming.

CPET may also have nucleating agents added thereto in order to enhance the formation of crystalline structures in the material. Alternatively, other additives may be introduced to PET in order to increase the stiffness and/or durability, e.g., glass particles or fibres.

Typically, PET films and bottles have a limited degree of crystallinity and usually have small crystallites leading to a clear and transparent material. This is perhaps the most common form of PET. CPET requires more careful control when forming and thus can be much more costly to produce.

CPET is much less subject to deformation under stress, especially at larger temperatures, than amorphous PET (APET). This is primarily because of the rigidity of the crystalline structures therein. Because semi-crystalline polyesters include both crystalline and amorphous regions, they can be characterised by a glass transition temperature. For PET, the glass transition temperature is between 67°C for amorphous PET to 81°C for semi-crystalline PET. Therefore, in the case of PET, a higher glass transition temperature correlates with a larger degree of crystallinity, and thus PET having a higher glass transition temperature is desired for use as the valve cup 10, preferably over 74°C.

In a preferential embodiment, polybutylene terephthalate (PBT)is used as the plastic material of the valve cup 10. PBT is always semi-crystalline in normal commercial settings. Typically, the degree of crystallinity is always greater than 30%, and is usually in the range of 40% to 50%. Although the glass transition temperature is approximately 66°C for PBT, PBT is generally more rigid that amorphous PET owing to the higher degree of crystallinity. This makes PBT an excellent choice of material for use as the valve cup 10.

Yet another material that is suitable is polyethylene napthalate (PEN). PEN is very stable, particularly at higher temperatures. PEN can also form a semi-crystalline structure and has a glass transition temperature of approximately 125°C. Compared to PET, PEN has higher oxygen and water vapour barrier, tensile strength and flexural modulus. In addition, moulding and blowing cycles for PEN are much shorter than for PET leading to increased productivity. However, the cost of PEN is, at present, much higher than PET.

It should also be appreciated than many other polyesters may be used provided that they display appropriate semi-crystalline properties. Blends of polyesters may also be used. In one example, a PEN/PET copolymer may be used, wherein the percentage of PEN is relatively low in comparison to the percentage of PET, e.g., between 10-20% PEN for reasons of cost. Other copolymers may be used such as PET/PBT copolymers, or even PET/PBT/PEN copolymers. However, any of PET, PBT, or PEN may also be blended with other polyesters and/or other additives, such as nucleating agents, to form semi-crystalline structures.

Moreover, when the valve cup 10 is formed from a semi-crystalline polyester, the valve cup 10 can be welded to the container 30 when the container is formed of a second plastic material. The welding can be performed using any suitable technique to weld two plastics together, but is preferably one of friction welding, ultrasonic welding, or laser welding. In the first embodiment, the container 30 may be formed of PET with any appropriate degree of crystallinity and subsequently welded to the valve cup 10. This ensures that the valve cup 10 (e.g., the inverted U-shaped receiving portion 16) does not separate from the container 30 (e.g., the lip portion 38) even when deformation of the container 30 at high temperatures occurs.

In accordance with the first embodiment of the invention, using a semi-crystalline polyester as the material for the valve cup 10 ensures that the valve 50 is suitable held by the valve cup 10 at temperatures over 50°C because deformation or distortion of the valve cup 10 does not occur. In addition, using a semi-crystalline polyester as the material for the valve cup 10 means that a plastic container 30 can be welded to the valve cup 10 thus ensuring that the seal between the container 30 and valve cup 10 is maintained even if deformation of the container 30 occurs. Thus, the advantageous properties of PET when used as the container 30 can be retained without compromising sealing performance at higher temperatures.

It should be appreciated, however, that the material of the container 30 is not limited to PET but may be any suitable polyester and may also be formed of any of the semi-crystalline polyesters above.

As discussed above, the rigidity of the valve cup 10 can also be improved by using the enforcing members 18. The enforcing members 18 may be formed of the same semi-crystalline polyester or may be formed of a different material, e.g., metal.

It should be appreciated that various modifications to the specific structure of the valve cup 10, container 30, and valve 50 may be made while still conforming to the principles of the first embodiment of the invention.

### Second Embodiment

The second embodiment of the invention may be the same as the first embodiment, but vary only in the materials used for the container 30 and valve cup 10. That is, any structural features described in the first embodiment may equally be present in the second embodiment.

In the second embodiment, a part of the container 30 may be formed from any of the semi-crystalline polyesters used for the valve cup 10 of the first embodiment. Specifically, a part adjacent or in contact with the opening 32 of the container 30 is preferably formed from the semi-crystalline polyester. In contrast, the valve cup 10 may be formed from any polyester, such as PET.

In the second embodiment, the opening 32 of the container 30 maintains its rigidity at temperatures exceeding 50°C by virtue of being formed from the semi-crystalline polyester. The valve cup 10 may maintain the seal with respect to the valve 50 due to the compressive forces acting radially inward from the opening 32 of the container 30 if the valve cup 10 begins to deform at higher temperatures.

Alternatively, the valve cup 10 may be structured in such a manner as to channel any deformation to areas away from the valve 50, i.e., away from inclined portion 13. For example, with reference to Fig. 2a, the difference in heights h1 and h2 may aid in channelling any deformation to be concentrated in the sections connecting the inverted U-shaped receiving portion 16 and the inclined portion 13. Other structural configurations may also be considered. In some cases, the enforcing members 18 may be configured to prevent any deformation of the valve cup 10 at locations surrounding the valve 50.

In the second embodiment, the container 30 is preferably formed from the semi-crystalline polyester only at a portion adjacent or in contact with the opening 32. This may include only the lip portion 38. Alternatively, the entire neck portion 36 and lip portion 38 may be made from the semi-crystalline polyester. In other configurations, the entire container 30 may be formed from the semi-crystalline polyester, although this may increase the costs and/or difficulty of the manufacturing processes associated with forming the container 30.

As with the first embodiment, in accordance with the second embodiment of the invention, using a semi-crystalline polyester as the material for at least a part of the container 30 ensures that the valve cup 10 is suitably held by the container 30 at temperatures over 50°C because deformation or distortion of the opening 32 of container 30 does not occur. This can limit or appropriately deflect any deformation of the valve cup 10 meaning that the valve 50 is stably held. In addition, using a semi-crystalline polyester as the material for a part proximate to the opening 32 of the container 30 means that a polyester valve cup 10 can be welded to the container 30 thus ensuring that the seal between the container 30 and valve cup 10 is maintained even if deformation of the valve cup 10 occurs. The advantageous properties of using PET when used as the valve cup 10 and potentially as part of the container 30 can be retained without compromising sealing performance at higher temperatures.

It should be appreciated, however, that the material of the valve cup 10 is not limited to PET but may be any suitable polyester and may also be formed of any of the semi-crystalline polyesters above.

### Third Embodiment

In the third embodiment, the primary material of the valve cup 10 may be a metal or other rigid material. Preferably, the primary material is aluminium. The structure of the valve cup 10 may be the same as in the first embodiment.

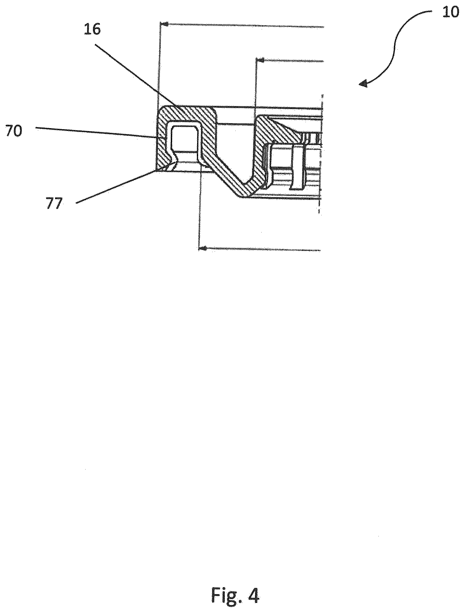

Fig. 4 shows an example of the valve cup 10 in accordance with the third embodiment of the present invention. In Fig. 4, a polyester lining 70 may be provided on a surface of the valve cup 10, preferably at a portion that contacts the container 30. The polyester lining 70 may be formed only in a region that contacts the container 30, e.g., on the inner surfaces of the inverted U-shaped receiving portion 16, or may be formed entirely on the lower surface of the valve cup 10. Additionally, the polyester lining 70 may be coated on the valve cup 10, or may be a separate component that is subsequently attached to via adhesive and/or held by the valve cup 10. In this regard, the valve cup 10 may be configured to clamp or hold a part of the polyester lining 70.

The polyester lining 70 may be formed from any polyester, but is preferably formed from PET. When the valve cup 10 is formed of a metal, i.e., aluminium, or other rigid material, the structural rigidity of the valve cup 10 at temperatures greater than 50°C is ensured by the structural rigidity of the metal or rigid material. In other words, the metal or rigid material does not deform at temperatures greater than 50°C. This means that the valve cup 10 may reliably hold and seal the valve 50.

Providing the polyester lining 70 on a part of the valve cup 10 means that the polyester lining 70 can be welded using any of the aforementioned techniques to a polyester based container 30, e.g., the container 30 of the first embodiment. In this way, the valve cup 10 can be reliably attached to the container 30 such that any deformation of the container 30 at temperatures greater than 50°C does not cause the valve cup 10 and container 30 to separate, and thus the seal therebetween is maintained.

The advantageous effects described in both the first and second embodiments can therefore be realised by the third embodiment; namely, that the seal between the valve 50 and valve cup 10 and the seal between the valve cup 10 and container 30 can be maintained at temperatures greater than 50°C.

As seen in Fig. 4, the polyester lining 70 may also be provided with projections 77 similar to the projections 17 of the first embodiment. The projections 77 may be formed additionally as part of the polyester lining 70, i.e., varying thickness of the polyester lining 70, or they may be formed as a natural consequence of following the projections 17 when coating the valve cup 10.

While the_polyester lining 70 does not have to be formed from the semi-crystalline polyesters as discussed in the first and second embodiments, in accordance with some embodiments of the present invention wherein it is present and in order to prevent deformation of the polyester lining 70 that may lead to detachment from the valve cup 10, the polyester lining 70 is formed from the semi-crystalline polyesters.

### Method for assembling dispensing system

A method of assembling the dispensing system using valve cups 10 according to any of the first through third embodiments is now described.

Fig. 5 exemplifies a method of assembling the dispensing system. Initially, the valve 50 is coupled to the valve cup 10. An exemplary method for performing this coupling has been described with respect to the first embodiment, and so will not be repeated here. Essentially any method or coupling may be performed depending upon the exact structure of the valve 50 and the valve cup 10.

A first step, as shown in Fig, 5(a), involves coupling the bag 100 to the valve 50. More specifically, an opening of the bag 100 is attached to a lower part of the valve 50, e.g., lower channel 57, such that the valve 50 can be in fluid communication with the interior of the bag 100 when actuated. The valve 50 may be provided with any means for facilitating this coupling, such as the recesses 58 in Fig. 1. The bag 100 may be secured by any suitable means such as adhesive, welding, or clamping. The combination of bag 100 and valve 50 in a fixed arrangement is generally referred to as a Bag On Valve (BOV). The bag 100 is preferably liquid, gas, or fluid impermeable.

Once the bag 100 is securely attached to the valve 50, the bag 100 may be folded to reduce the footprint thereof. As shown in Fig. 5(b), the bag 100 may be folded in such a way that the footprint is less than the diameter of the valve cup 10. Preferably, the footprint is less than the diameter of the opening 32 of a container 30 to which the valve cup 10 is to be assembled such that the BOV may be inserted into the opening 32. In an exemplary method, the BOV is folded such that the footprint has a diameter d4 less than 25 mm or 22 mm, although other diameters are possible.

The folding may be performed in any manner so as to reduce the footprint of the BOV and allow insertion into the container 30. In one example, the flat bag 100 is rolled around the axis of the valve 50 and valve cup 10 such that the bag 100 is in a spiralled configuration centred on the axis of the valve 50. In another example, the bag 100 may be folded in a concertina. In both cases, the BOV is preferably provided with a suitable footprint.

In contrast to known methods, the BOV may not be provided with a containing sleeve or tape to retain the BOV in the folded configuration. Rather, the folded BOV is preferably inserted directly into the container 30, as is shown in Fig. 5(c). In this step, the BOV is slid through the opening 32 of the container 30 while maintained in the folded state to improve the ease of insertion.

Once partially inserted, the inner region of the container 30 may be filled with gas, preferably a propellant gas. Suitable propellant gasses are known in the art and are not discussed further herein. The method used is preferably undercup gassing, which essentially means that the gas is passed under the valve cup 10 and into the region between the bag 100 and the inner volume of the container 30. In the present invention, the inner volume of the container 30 may be pressurised to a pressure between 1 to 3 bar, preferably 1.5 to 2.5 bar.

As seen in Fig. 5(d), once the gassing is complete, the BOV is inserted into the container 30 such that valve cup 10 contacts the opening 32 of the container 30. In a preferred configuration, the valve cup 10 is provided with the inverter U-shaped receiving portion 16 and the container 30 is provided with the lip portion 38. Thus, the BOV may be inserted into the container 30 until the lip portion 38 of the container 30 abuts the inverted U-shaped receiving portion 16.

In a more preferably configuration, the inverted U-shaped receiving portion 16 comprises the projections 17, 77 which are adapted to engage in a snap-fit manner with the underside of the lip portion 38. In this way, when the valve cup 10 is pressed onto the lip portion of the container 30, the U-shaped receiving portion 16 may deform slightly to allow the projections 17, 77 to pass over the lip portion 38 and subsequently return to their resting state once the projections 17, 77 have passed over the lip portion 38. Securing the valve cup 10 in this way aids in ensuring that the welding process is performed with improved accuracy as the valve cup 10 can be reliably aligned with the container 30.

As seen in Fig. 5(e), a welding head 110 may be positioned over the valve cup 10 in order to weld the valve cup 10 to the container 30. As described in the first through third embodiments, the valve cup 10 and container 30 may be formed, at least in part, from polyesters. This means that welding, such as friction welding, ultrasonic welding, or laser welding, can be performed so as to weld the valve cup 10 to the container 30. Any of the welding techniques can be used and these techniques are generally known in the art and so are not described in any further detail herein.

Once the welding is completed, the dispensing system 1 is assembled. Further assembly steps may be possible, such as adding a protection overcap 120 to cover the exposed part of the valve 50 as seen in Fig. 5(f). The assembled dispensing systems 1 may then be transported to various consumers to be filled with a variety of different products. To fill the dispensing systems, the fluid medium to be dispensed is passed through the valve 50 into the bag 100, i.e., via upper channel 55, through hole 56, and lower channel 57. The pressure in the container 30 increases as the bag 100 fills with the fluid medium. Preferably, the pressure increases to around 6 to 8 bar, preferably 6.5 to 7.5 bar. This increase in pressure aids in dispensing the fluid medium when the valve 50 is actuated by a user.

It should be noted that some or all of the steps of the method may be performed in a sealed environment. This may aid in assembling the dispensing system 1 when the pressure is increased.

According to this method, the dispensing systems are assembled by welding the valve cup 10 to the container 30 after experiencing undercup gassing. Conventional methods rely on clinching the valve cup to the container, whereas the present assembly method utilises the welding of a specially modified valve cup 10 to a container 30. The welding may also be performed at lower pressures and without the presence of the fluid medium to the dispensed. This can ensure a more reliable weld and potentially prevent any contamination of the fluid medium to be dispensed.

The present invention therefore provides a valve cup 10 or container 30 that is modified to be rigid at temperatures exceeding 50°C, while also allowing for welding between the valve cup 10 and container 30. Primarily, this can be achieved by using either a semi-crystalline polyester with a high degree of crystallinity, or by making use of a polyester layer on a metal or rigid material valve cup.

## Claims

1. A valve cup (10) for use with a container (30) for dispensing a fluid medium stored under pressure, the valve cup (10) adapted to support a valve (50) and to seal an opening of the container (30), wherein:
the valve cup (10) comprises a central opening (11) that is adapted to receive and support the valve (50);
**characterised in that**
the valve cup (10) is formed from a first plastic material that is a semi-crystalline polyester and **in that**
the valve cup (10) comprises one or more enforcing members (18) radially protruding from the central opening (11), the one or more enforcing members (18) integrally formed with the valve cup (10) and adapted to increase the rigidity of the valve cup (10).

2. The valve cup (10) of claim 1, wherein the first plastic material has a degree of crystallinity greater than 35%, preferably greater than 38%, when measured using differential scanning calorimetry.

3. The valve cup (10) of any of the preceding claims, wherein the first plastic material is selected from the group consisting of: crystallised PET, PBT, PEN, PEN/PET copolymers, or a blend of any of the foregoing.

4. The valve cup (10) of any of the preceding claims, wherein the valve cup (10) comprises an inverted U-shaped receiving portion (16) configured to receive a lip portion (38) of the container (30).

5. The valve cup (10) of any of the preceding claims, in particular claim 4, wherein the inverted U-shaped receiving portion (16) comprises at least one protrusion (17) on a surface facing the container (30) when receiving the lip portion (38), the protrusion (17) adapted to frictionally engage the lip portion (38).

6. A fluid medium dispensing system comprising:
a container (30 for storing a fluid medium under pressure, the container (3) comprising an opening (32);
a valve (50; and
the valve cup (10) of any of the preceding claims adapted to support the valve (50) and seal the opening (32) of the container (30), wherein
the container (30) is formed from a second plastic material, and the first plastic material is weldable to the second plastic material.

7. The system of claim 6, wherein the second plastic material is a polyester, preferably PET.

8. The system of any of claims 6 to 7, wherein the valve cup is weldable to the container by one of: friction welding, ultrasonic welding, and laser welding thereby to provide a seal between the valve cup (10) and the opening (32) of the container (30).

9. The system of claims 6 to 8, wherein at least a part of the container (30) adjacent the opening (32) is formed from a first plastic material that is a semi-crystalline polyester.

10. The system of claim 9, wherein the first plastic material has a degree of crystallinity greater than 35%, preferably greater than 38%, when measured using differential scanning calorimetry.

11. The system of any of claims 9 to 10, wherein the container (30) comprises a neck (36), the neck (36) connecting the opening (32) to a main body (34) of the container, and wherein the entire neck (36) of the container is formed of the first plastic material.

12. The system of any of claims 9 to 11, wherein the entire container (30) is formed of the first plastic material.

13. The system of any of claims 9 to 12 wherein the valve cup (10) is provided with a semi-crystalline polyester lining (70) at at least a part of the valve cup (10) adapted to contact the container (30) and said polyester lining (70) is weldable to the second plastic material.

14. The system according to claim 13, wherein the polyester lining (70) is formed from PET.

15. The system according to claim 13 or 14, wherein the polyester lining (70) is coated or fixed by adhesive to the valve cup (10) and provided on an underside of the valve cup (10).

## Patentansprüche

1. Ventilbecher (10) zur Verwendung mit einem Behälter (30) zum Ausgeben eines fluiden Mediums, das unter Druck gespeichert ist, wobei der Ventilbecher (10) dazu ausgelegt ist, ein Ventil (50) zu stützen und eine Öffnung des Behälters (30) abzudichten, wobei:
der Ventilbecher (10) eine zentrale Öffnung (11), die dazu ausgelegt ist, das Ventil (50) aufzunehmen und zu stützen, umfasst;
**dadurch gekennzeichnet, dass**
der Ventilbecher (10) aus einem ersten Kunststoffmaterial, das ein teilkristalliner Polyester ist, gebildet ist, und dadurch, dass
der Ventilbecher (10) ein oder mehrere verstärkende Elemente (18), die radial von der zentralen Öffnung (11) vorstehen, umfasst, wobei das eine oder die mehreren verstärkenden Elemente (18) einstückig mit dem Ventilbecher (10) gebildet sind und dazu ausgelegt sind, die Steifigkeit des Ventilbechers (10) zu erhöhen.

2. Ventilbecher (10) nach Anspruch 1, wobei das erste Kunststoffmaterial einen Grad der Kristallinität von mehr als 35 %, bevorzugt mehr als 38 %, aufweist, wenn unter Verwendung von Differentialscanningkalorimetrie gemessen wird.

3. Ventilbecher (10) nach einem der vorhergehenden Ansprüche, wobei das erste Kunststoffmaterial ausgewählt ist aus der Gruppe bestehend aus: kristallisiertem PET, PBT, PEN, PEN/PET-Copolymeren oder einer Mischung aus beliebigen der Vorstehenden.

4. Ventilbecher (10) nach einem der vorhergehenden Ansprüche, wobei der Ventilbecher (10) einen umgekehrt U-förmigen Aufnahmeabschnitt (16) umfasst, der dazu konfiguriert ist, einen Lippenabschnitt (38) des Behälters (30) aufzunehmen.

5. Ventilbecher (10) nach einem der vorhergehenden Ansprüche, insbesondere Anspruch 4, wobei der umgekehrt U-förmige Aufnahmeabschnitt (16) mindestens einen Vorsprung (17) an einer Oberfläche, die dem Behälter (30) zugewandt ist, wenn er den Lippenabschnitt (38) aufnimmt, umfasst, wobei der Vorsprung (17) dazu ausgelegt ist, mit dem Lippenabschnitt (38) in Reibeingriff zu kommen.

6. System zum Ausgeben eines fluiden Mediums, umfassend:
einen Behälter (30 zum Speichern eines fluiden Mediums unter Druck, wobei der Behälter (3) eine Öffnung (32) umfasst;
ein Ventil (50; und
den Ventilbecher (10) nach einem der vorhergehenden Ansprüche, der dazu ausgelegt ist, das Ventil (50) zu stützen und die Öffnung (32) des Behälters (30) abzudichten, wobei
der Behälter (30) aus einem zweiten Kunststoffmaterial gebildet ist und das erste Kunststoffmaterial an das zweite Kunststoffmaterial schweißbar ist.

7. System nach Anspruch 6, wobei das zweite Kunststoffmaterial ein Polyester, bevorzugt PET, ist.

8. System nach einem der Ansprüche 6 bis 7, wobei der Ventilbecher an den Behälter schweißbar ist durch eines der Folgenden: Reibungsschweißen, Ultraschallschweißen und Laserschweißen, um so eine Abdichtung zwischen dem Ventilbecher (10) und der Öffnung (32) des Behälters (30) bereitzustellen.

9. System nach den Ansprüchen 6 bis 8, wobei mindestens ein Teil des Behälters (30) benachbart zu der Öffnung (32) aus einem ersten Kunststoffmaterial, das ein teilkristalliner Polyester ist, gebildet ist.

10. System nach Anspruch 9, wobei das erste Kunststoffmaterial einen Grad der Kristallinität von mehr als 35 %, bevorzugt mehr als 38 %, aufweist, wenn unter Verwendung von Differentialscanningkalorimetrie gemessen wird.

11. System nach einem der Ansprüche 9 bis 10, wobei der Behälter (30) einen Hals (36) umfasst, der Hals (36) die Öffnung (32) mit einem Hauptkörper (34) des Behälters verbindet und wobei der gesamte Hals (36) des Behälters aus dem ersten Kunststoffmaterial gebildet ist.

12. System nach einem der Ansprüche 9 bis 11, wobei der gesamte Behälter (30) aus dem ersten Kunststoffmaterial gebildet ist.

13. System nach einem der Ansprüche 9 bis 12, wobei der Ventilbecher (10) mit einer Auskleidung (70) aus teilkristallinem Polyester an mindestens einem Teil des Ventilbechers (10) bereitgestellt ist, der dazu ausgelegt ist, mit dem Behälter (30) in Kontakt zu stehen, und wobei die Polyester-Auskleidung (70) an das zweite Kunststoffmaterial schweißbar ist.

14. System nach Anspruch 13, wobei die Polyester-Auskleidung (70) aus PET gebildet ist.

15. System nach Anspruch 13 oder 14, wobei die Polyester-Auskleidung (70) auf den Ventilbecher (10) aufgetragen oder mit einem Kleber an dem Ventilbecher (10) befestigt ist und an einer Unterseite des Ventilbechers (10) bereitgestellt ist.

## Revendications

1. Coupelle de valve (10) à utiliser avec un récipient (30) pour distribuer un milieu fluide stocké sous pression, la coupelle de valve (10) étant adaptée pour supporter une valve (50) et pour sceller une ouverture du récipient (30),
la coupelle de valve (10) comprenant une ouverture centrale (11) qui est adaptée pour recevoir et supporter la valve (50) ;
**caractérisée en ce que**
la coupelle de valve (10) est formée à partir d'une première matière plastique qui est un polyester semi-cristallin et **en ce que**
la coupelle de valve (10) comprend un ou plusieurs organes de renforcement (18) faisant radialement saillie à partir de l'ouverture centrale (11), les un ou plusieurs organes de renforcement (18) étant formés intégralement avec la coupelle de valve (10) et adaptés pour augmenter la rigidité de la coupelle de valve (10).

2. Coupelle de valve (10) selon la revendication 1, dans laquelle la première matière plastique a un degré de cristallinité supérieur à 35 %, de préférence supérieur à 38 %, lors d'une mesure par calorimétrie à balayage différentiel.

3. Coupelle de valve (10) selon l'une quelconque des revendications précédentes, dans laquelle la première matière plastique est choisie dans le groupe consistant en : du PET cristallisé, du PBT, du PEN, des copolymères PEN/PET, ou un mélange de l'un quelconque des précédents.

4. Coupelle de valve (10) selon l'une quelconque des revendications précédentes, la coupelle de valve (10) comprenant une portion de réception en forme de U inversé (16) configurée pour recevoir une portion de lèvre (38) du récipient (30).

5. Coupelle de valve (10) selon l'une quelconque des revendications précédentes, en particulier la revendication 4, dans laquelle la portion de réception en forme de U inversé (16) comprend au moins une protubérance (17) sur une surface faisant face au récipient (30) lors de la réception de la portion de lèvre (38), la protubérance (17) étant adaptée pour engager par frottement la portion de lèvre (38).

6. Système de distribution de milieu fluide comprenant :
un récipient (30 pour stocker un milieu fluide sous pression, le récipient (3) comprenant une ouverture (32) ;
une valve (50 ; et
la coupelle de valve (10) de l'une quelconque des revendications précédentes, adaptée pour supporter la valve (50) et sceller l'ouverture (32) du récipient (30), dans lequel
le récipient (30) est formé à partir d'une seconde matière plastique, et la première matière plastique peut être soudée à la seconde matière plastique.

7. Système selon la revendication 6, dans lequel la seconde matière plastique est un polyester, de préférence du PET.

8. Système selon l'une quelconque des revendications 6 et 7, dans lequel la coupelle de valve peut être soudée au récipient par l'un parmi : un soudage par frottement, un soudage par ultrasons et un soudage laser, afin de fournir un scellement entre la coupelle de valve (10) et l'ouverture (32) du récipient (30).

9. Système selon les revendications 6 à 8, dans lequel au moins une partie du récipient (30) adjacente à l'ouverture (32) est formée à partir d'une première matière plastique qui est un polyester semi-cristallin.

10. Système selon la revendication 9, dans lequel la première matière plastique a un degré de cristallinité supérieur à 35 %, de préférence supérieur à 38 %, lors d'une mesure par calorimétrie à balayage différentiel.

11. Système selon l'une quelconque des revendications 9 et 10, dans lequel le récipient (30) comprend un col (36), le col (36) reliant l'ouverture (32) à un corps principal (34) du récipient, et dans lequel le col (36) entier du récipient est formé de la première matière plastique.

12. Système selon l'une quelconque des revendications 9 à 11, dans lequel le récipient (30) entier est formé de la première matière plastique.

13. Système selon l'une quelconque des revendications 9 à 12, dans lequel la coupelle de valve (10) est pourvue d'un revêtement en polyester semi-cristallin (70) au niveau d'au moins une partie de la coupelle de valve (10) adaptée pour entrer en contact avec le récipient (30) et ladite revêtement en polyester (70) peut être soudée à la seconde matière plastique.

14. Système selon la revendication 13, dans lequel le revêtement en polyester (70) est formée à partir de PET.

15. Système selon la revendication 13 ou 14, dans lequel le revêtement en polyester (70) est revêtue ou fixée par adhésif sur la coupelle de valve (10) et prévue sur une face inférieure de la coupelle de valve (10).
